# EUROPÄISCHE PATENTSCHRIFT

(11) **EP 0 854 249 B1**
(45) Veröffentlichungstag und Bekanntmachung des Hinweises auf die Patenterteilung: **02.05.2002**
(21) Anmeldenummer: 98100037.5
(22) Anmeldetag: 03.01.1998
(51) Int. Cl.: E04D 5/06, E04D 5/10, B32B 3/30

(54) **Stollenbahn für Dächer**
Roofing sheet with studs
Bande de toiture avec crampons

(30) Priorität: 17.01.1997 DE 29700749 U
(43) Veröffentlichungstag der Anmeldung: 22.07.1998
(73) Patentinhaber: Dr. Kohl GmbH & Cie Dachbelag- und Bautenschutzmittel-Fabrik, D-46282 Dorsten (DE)
(72) Erfinder: Hailer, Dieter, 40474 Düsseldorf (DE); Hörnig, Andreas Dr., 46284 Dorsten (DE)
(74) Vertreter: Spalthoff, Adolf, Dipl.-Ing.

(56) Entgegenhaltungen:
- EP-A- 0 090 489
- EP-A- 0 201 884
- EP-A- 0 287 078
- EP-A- 0 447 876
- EP-A- 0 764 748
- GB-A- 2 040 797
- US-A- 3 715 846
- US-A- 4 091 135
- US-A- 4 612 152
- DATABASE WPI Section Ch, Week 8419 Derwent Publications Ltd., London, GB; Class A94, AN 84-116881 XP002055524 & JP 59 053 787 A (NITTO ELECTRIC IND CO) , 28.März 1984

## Beschreibung

Die Erfindung bezieht sich auf eine Stollenbahn für Dächer ud.dgl. nach dem Oberbegriff des Patentanspruchs 1.

Derartige Stollenbahnen mit dem dem Dampfdruckausgleich dienenden Hohlraumsystem haben sich als besonders betriebssicher und dauerhaft erwiesen. Der Dampfdruck, der ansonsten für Flachdächer eine dauernde Belastung darstellt, wird aufgrund der Stollen ohne weiteres beherrscht. Gleichzeitig vermindert das Hohlraumsystem die Übertragung von Bewegungen aus darunterliegenden Schichten des Daches auf die Stollenbahn und ermöglicht darüber hinaus eine gewisse Eigenbeweglichkeit derselben.

In der EP 0 201 884 ist eine derartige Stollenbahn für Dächer ud.dgl. beschrieben, bei der bereits ein Träger vorgesehen ist, an dessen Unterseite eine Dichtungsschicht aus Polymerbitumen angeordnet ist. An der Unterseite dieser Dichtungsschicht sind Längs- und Quernuten ausgebildet, so daß an der Unterseite der Dichtungsschicht Stollen vorhanden sind, die dazu dienen, zwischen der auf ein Dach verlegten Stollenbahn und dem Dach ein Hohlraumsystem auszubilden, mittels dem zwischen Stollenbahn und Dach ein allseitiger Dampfdruckausgleich möglich ist. In einer in Fig. 2 der genannten Druckschrift dargestellten alternativen Ausführungsform sind an der Unterseite der Deckschicht Vorsprünge ausgebildet, die ihrerseits Stollen bilden.

Die Unterseite der vorstehend geschilderten Stollenbahn für Dächer ud.dgl. ist im aufgerollten Zustand der Stollenbahn mittels einer Folie abgedeckt, um die Handhabbarkeit der Stollenbahn zu verbessern.

Bei dieser bekannten Stollenbahn erfolgt die Verlegung, indem eine innige Verbindung zwischen der Unterseite der Dichtungsschicht selbst und der Oberfläche des Daches od.dgl. hergestellt wird. Entsprechend muß bei der Auswahl des Werkstoffs für die untere Dichtungsschicht berücksichtigt werden, daß der ausgewählte Werkstoff einem vergleichsweise komplexen Anforderungsprofil genügt. Zunächst ist wesentlich für eine dauerhaft zuverlässige Funktion der Dichtungsschicht, daß, wie der Name schon sagt, die langfristigen Dichtigkeitseigenschaften des Werkstoffs ausreichend sind. Des weiteren muß der für die Dichtungsschicht ausgewählte Werkstoff in einer Weise formstabil sein, daß die an der Unterseite der Dichtungsschicht ausgebildeten Stollen langfristig existent und standfest bleiben, da nur dann langfristig der Dampfdruckausgleich zwischen der Unterseite der Stollenbahn und der Oberseite des abzudichtenden Daches gewährleistet bleibt. Außerdem muß der die Dichtungsschicht bildende Werkstoff noch in der Lage sein, insbesondere an den freien Stirnflächen der Stollen an der Unterseite der Dichtungsschicht und der Oberfläche des abzudichtenden Daches eine dauerhaft haltbare innige Verbindung einzugehen.

Des weiteren hat sich im Falle der aus der EP-A-0 201 884 bekannten Stollenbahn als nachteilhaft erwiesen, daß der an der Oberseite der Dichtungsschicht angeordnete Träger dieser bekannten Stollenbahn insbesondere bei widrigen klimatischen Verhältnissen seine für die dauerhafte Funktionsfähigkeit der Stollenbahn erforderlichen mechanischen Eigenschaften einbüßen kann.

Der Erfindung liegt daher die Aufgabe zugrunde, ausgehend von dem vorstehend geschilderten Stand der Technik eine Stollenbahn für Dächer ud.dgl. zu schaffen, deren unter der Trägereinlage angeordnete Dichtungsschicht den an sie gestellten Anforderungen besser genügen kann, die einfacher verlegbar ist und deren Trägereinlage langfristiger betriebssicher ist.

Diese Aufgabe wird erfindungsgemäß durch die Merkmale im kennzeichnenden Teil des Patentanspruchs 1 gelöst.

Durch die an der Oberseite der Trägereinlage angeordnete obere Deckschicht werden jedwede nachteilhaften Einwirkungen auf die Trägereinlage zuverlässig ausgeschlossen. Die Trägereinlage der erfindungsgemäßen Stollenbahn bleibt somit langfristig betriebssicher. Dadurch, daß im Falle der erfindungsgemäßen Stollenbahn auf der Unterseite der unteren Deckschicht und der Stollen die Selbstklebeschicht vorgesehen ist, kann zum einen die Verlegbarkeit der Stollenbahn erleichtert werden, da für die Selbstklebeschicht ein Werkstoff ausgewählt werden kann, der in einfacher Weise mit der Oberfläche des abzudichtenden Daches verbindbar ist. Statische Eigenschaften oder Dichtigkeitseigenschaften können bei der Auswahl des Werkstoffs für die Selbstklebeschicht vollständig außer acht gelassen werden. Andererseits können bei der Auswahl des Werkstoffs für die untere Deckschicht Klebeeigenschaften vollständig unberücksichtigt bleiben, so daß bei der Auswahl des Werkstoffs für die untere Deckschicht lediglich die langfristige Formstabilität des Werkstoffs und die Dichtigkeitseigenschaften des Werkstoffs beachtet werden müssen.

Die Selbstklebeschicht kann als dunner Film ausgebildet sein

Vorteilhaft weist die untere Deckschicht an einem Quer-Randbereich und an einem Längs-Randbereich an ihrer Unterseite stollenfreie Abschnitte und ebenfalls eine Selbstklebeschicht auf.

Die Aufbringung der Selbstklebeschicht bzw. des dünnen Filmes erfolgt nach einem weiteren Vorschlage der Erfindung mittels einer Walze auf die Unterseite der unteren Deckschicht sowie auf die Stollen.

Zur Stabilität der Stollenbahn kann die Trägereinlage vorzugsweise in Form eines Glasvlieses oder Glasgewebes oder anderer für Dachbahnen an sich bekannter und üblicher Trägermaterialien vorliegen.

Die Trägereinlage ist nach einem weiteren Vorschlage der Erfindung mit einer Masse aus Bitumen oder Polymerbitumen, vorzugsweise aus Plastomerbitumen, getränkt.

Die untere Deckschicht der Stollenbahn besteht vorzugsweise aus mit Füllstoffen stabilisiertem Plastomerbitumen oder anderen bezüglich Wärme- und Druckbelastung hochstandfesten Polymerbitumina.

Die obere Deckschicht besteht vorzugsweise aus mit Füllstoff stabilisiertem Plastomerbitumen oder wahlweise nach Dachaufbau aus anderen Polymerbitumina.

Zur Erleichterung der Handhabung der erfindungsgemäßen Stollenbahn ist es zweckmäßig, die Selbstklebeschicht an der Unterseite der Stollenbahn sowie der Stollen mittels einer silikonisierten und abziehbaren Trennlage od.dgl. abzudecken.

Des weiteren kann die obere Deckschicht der Stollenbahn mit einer Polymerfolie oder einem Polymervlies od.dgl. abgedeckt sein.

Die US-A-4 612 152 zeigt eine an ihrer Unterseite mit Stollen versehenen Deckschicht, an deren Oberseite ein Träger vorgesehen ist. Mittels dieser Deckschicht soll einerseits ein Dampfdruckausgleich zwischen Deckschicht und Dach und andererseits eine wirkungsvolle Abdichtung erzielt werden. Bei der Verlegung dieser Deckschicht wird als Verbindungsmittel zwischen der Deckschicht und der Dachfläche ein wasserhaltiges Adhesiv eingesetzt. Des weiteren wird in der US-A-4 612 152 eine Dachbahn beschrieben, die aus zwei unmittelbar miteinander verbundenen Kunststofflagen besteht, wobei die untere Kunststofflage als Schaumstofflage ausgebildet ist und Nuten aufweist, die an der dem Dach zugewandten Unterseite dieser Lage vorgesehen sind. Die Dichtungswirkung der bekannten Stollenbahn wird im wesentlichen durch die obere der beiden Lagen gesichert.

Die als Stand der Technik gemäß EPÜ Art. 64 (3) zu berücksichtigende EP-A-0 764 748 zeigt eine Dachbahn, an deren Unterseite keine Maßnahmen zur Schaffung eines Dampfdruckausgleichssystems vorgesehen sind. Die bei der bekannten Dachbahn vorgesehenen Wellungen der Trägerschicht dienen dazu, Rutschungen der Trägerschicht in jedem Fall zuverlässig auszuschließen. Die Klebeschicht der bekannten Dachbahn hat nicht nur Klebe- sondern darüber hinaus die eigentliche Abdichtungsfunktion.

Im folgenden wird die Erfindung an Hand einer Ausführungsform unter Bezugnahme auf die Zeichnung näher erläutert.

Es zeigen:
- Figur 1: einen Teilschnitt durch eine Ausführungsform der erfindungsgemäßen Stollenbahn; und
- Figur 2: eine teilweise Unteransicht der erfindungsgemäßen Stollenbahn.

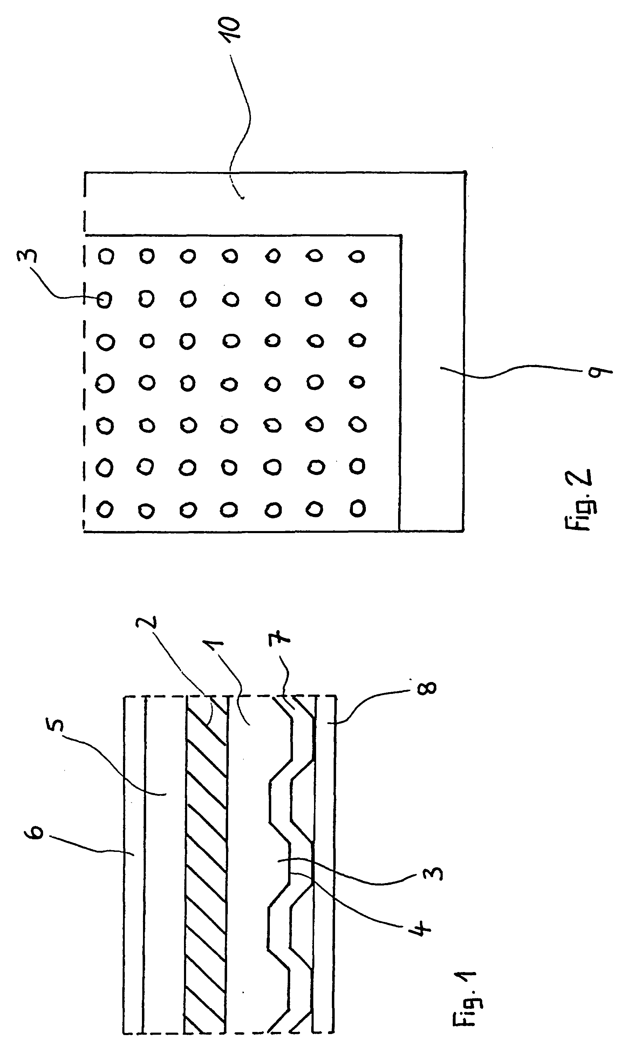

Eine in den Figuren 1 und 2 im Prinzip dargestellte Ausführungsform einer erfindungsgemäßen Stollenbahn weist eine untere 1 und eine obere Deckschicht 5 auf, welche aus Stabilitätsgründen mit einer Trägereinlage 2 aus einem Glasvlies oder einem Glasgewebe od.dgl. versehen ist.

An der Unterseite der unteren Deckschicht 1 sind Vorsprünge in Form von nach unten vorragenden Stollen 3 vorhanden. Die mit der Klebeschicht 7 versehenen Stirnflächen 4 der Stollen 3 liegen mittels der auf diesen befindlichen Selbstklebeschicht 7 auf einem nicht weiter dargestellten Dach od.dgl. auf und sind über die Selbstklebeschicht mit diesem haftend verbindbar.

Die untere Deckschicht 1 besteht vorzugsweise aus mit Füllstoffen stabilisiertem Plastomerbitumen oder anderen bezüglich Wärme- und Druckbelastung hochstandfesten Polymerbitumina.

Die obere Deckschicht 5 ist vorzugsweise aus mit Füllstoff stabilisiertem Plastomerbitumen oder wahlweise, je nach nach Dachaufbau, aus anderen Polymerbitumina hergestellt.

Die obere Deckschicht 5 wird mittels einer Polymerfolie 6 oder eines Polymervlieses abgedeckt.

An ihrer die Stollen 3 aufweisenden Unterseite ist die untere Deckschicht mit einer als dünner Film ausgebildeten Selbstklebeschicht 7 versehen.

Die Selbstklebeschicht 7 ist geeignet, unter Berücksichtigung der Flachdachrichtlinien einen festen Verbund zwischen der unteren Deckschicht 1 der Stollenbahn und dem darunter befindlichen, in den Figuren nicht dargestellten Dach od.dgl. herbeizuführen.

Zur Erleichterung der Handhabung der Stollenbahn ist die Selbstklebeschicht 7 mittels einer einseitig silikonisierten und abziehbaren Trennlage od.dgl. abgedeckt.

Wie aus Figur 2 ersichtlich, weist die Unterseite der Deckschicht 1 stollenfreie Randbereiche 9, 10 auf, von denen einer an einer Quer-Kante der Stollenbahn und der andere an einer Längs-Kante der Stollenbahn ausgebildet ist. Hierdurch läßt sich gemäß den Flachdachrichtlinien ein dichter und haftender Anschluß zwischen nebeneinander angeordneten bzw. aufeinanderfolgenden Stollenbahnen in einfacher Weise erzielen.

Diese Randbereiche 9, 10 sind ebenfalls mit einer dünnen, als Selbstklebeschicht 7 ausgeführten Lage versehen, die auch zur besseren Handhabung mit einer silikonisierten und abziehbaren Trennlage versehen ist.

Die erfindungsgemäß als Selbstklebebahn ausgebildete Stollenbahn entspricht aufgrund ihrer technischen Werte den Flachdachrichtlinien als Trennschicht, als Dampfdruckausgleichsschicht und als 1. Lage der Dachabdichtung.

Durch das Kaltklebesystem in Verbindung mit dem unterseitigen, zusammenhängenden Hohlraumsystem zwischen Dach und Stollenbahn kann mit dieser ohne Gefahr für die unkaschierte Wärmedämmung eine hochwertige Dampfdruckausgleichsschicht erstellt werden, die auch als 1. Lage der Dachabdichtung den Flachdachrichtlinien entspricht.

Weiterhin werden durch das Kaltklebesystem Schäden an der Oberseite der unkaschierten Wärmedämmung ausgeschlos - sen, die bei einer Dachabdichtung mit Schweißbahnen nach dem Stand der Technik durch das Anflämmen der Bahnen entstehen können. Das Stollensystem garantiert einen dauerhaften Dampfdruckausgleich.

Aufgrund der verhältnismäßig hohen Kosten für eine werksseitige Kaschierung eines Gefälledachsystems bzw. für die Anordnung einer zusätzlichen Trennschicht stellt die erfindungsgemäße Stollenbahn auch unter dem Aspekt einer Kostenersparnis eine für den Bauherrn, Planer und Anbieter wirtschaftliche Alternative dar, da diese Funktionen von der erfindungsgemäßen Stollenbahn übernommen werden.

## Patentansprüche

1. Stollenbahn für Dächer ud.dgl., mit einer Trägereinlage (2) und einer unteren Deckschicht (1), die unter der Trägereinlage (2) angeordnet und an deren Unterseite Stollen (3) ausgebildet sind, mittels denen zwischen der Stollenbahn und dem abzudichtenden Dach od.dgl. ein einem allseitigen Dampfdruckausgleich dienendes zusammenhängendes Hohlraumsystem ausbildbar ist, **dadurch gekennzeichnet, daß** auf der Unterseite der unteren Deckschicht (1) und der Stollen (3) eine Selbstklebeschicht (7) und an der Oberseite der Trägereinlage (2) eine obere Deckschicht (5) angeordnet ist.

2. Stollenbahn nach Anspruch 1, deren Selbstklebeschicht (7) als dünner Film ausgebildet ist.

3. Stollenbahn nach Anspruch 1 oder 2, deren untere Deckschicht (1) an einem Quer-Randbereich (9) und an einem Längs-Randbereich (10) an ihrer Unterseite stollenfreie Abschnitte und ebenfalls eine Selbstklebeschicht aufweist.

4. Stollenbahn nach einem der Ansprüche 1 bis 3, deren Selbstklebeschicht (7) derart ausgebildet ist, daß sie mittels einer Walze auf die Unterseite der unteren Deckschicht (1) und der Stollen (3) aufbringbar ist.

5. Stollenbahn nach einem der Ansprüche 1 bis 4, deren Trägereinlage (2) in Form eines Glasvlieses oder eines Glasgewebes oder anderer für Dachbahnen an sich bekannter und üblicher Trägermaterialien ausgebildet ist.

6. Stollenbahn nach einem der Ansprüche 1 bis 5, deren Trägereinlage (2) mit einer Masse aus Bitumen oder Polymerbitumen, vorzugsweise Plastomerbitumen, getränkt ist.

7. Stollenbahn nach Anspruch 1 bis 6, deren untere Deckschicht (1) vorzugsweise aus mit Füllstoffen stabilisiertem Plastomerbitumen oder anderen bezüglich Wärme- und Druckbelastung hochstandfesten Polymerbitumina besteht.

8. Stollenbahn nach Anspruch 1 bis 7, deren obere Deckschicht (5) vorzugsweise aus mit Füllstoff stabilisiertem Plastomerbitumen oder wahlweise, je nach Dachaufbau, aus anderen Polymerbitumina besteht.

9. Stollenbahn nach einem der Ansprüche 1 bis 8, deren Selbstklebeschicht (7) mittels einer silikonisierten und abziehbaren Trennlage od.dgl. abgedeckt ist.

10. Stollenbahn nach Anspruch 1 bis 9, auf deren oberen Deckschicht (5) eine Polymerfolie (6) oder ein Polymervlies od.dgl. angeordnet ist.

11. Stollenbahn nach Anspruch 1 bis 10, deren Randbereiche (9, 10) ebenfalls mit einer dünnen, als Selbstklebeschicht ausgeführten Lage versehen sind, die auch zur besseren Handhabung mit einer silikonisierten und abziehbaren Trennlage versehen ist.

## Claims

1. Support course for roofs and the like, having a carrier insert (2) and a lower outer layer (1) which is arranged below the carrier insert (2) and on the underside of which are formed supports (3), by means of which an interconnected cavity system, which acts as an all-round vapour pressure equalising system, can be formed between the support course and the roof, or the like, to be sealed, **characterised in that** a self-adhesive layer (7) is arranged on the underside of the lower outer layer (1) and the supports (3), and an upper outer layer (5) is arranged on top of the carrier insert (2).

2. Support course according to claim 1, whose self-adhesive layer (7) is in the form of a thin film.

3. Support course according to claim 1 or 2, whose lower outer layer (1) has, at the underside thereof, support-free portions and also a self-adhesive layer at a transverse edge region (9) and at a longitudinal edge region (10).

4. Support course according to any one of claims 1 to 3, whose self-adhesive layer (7) is formed in such a manner that it can be applied to the underside of the lower outer layer (1) and the supports (3) by means of a roller.

5. Support course according to any one of claims 1 to 4, whose carrier insert (2) is in the form of a glass-fibre fleece or a glass-fibre fabric or other carrier materials which are conventional and known per se for roof courses.

6. Support course according to any one of claims 1 to 5, whose carrier insert (2) is impregnated with a measure of bitumen or polymer bitumen, preferably plastomer bitumen.

7. Support course according to claims 1 to 6, whose lower outer layer (1) preferably comprises plastomer bitumen, which is stabilised with filler materials, or other polymer bitumens which are highly stable with regard to heat and pressure loads.

8. Support course according to claims 1 to 7, whose upper outer layer (5) preferably comprises plastomer bitumen which is stabilised with filler material or, optionally, other polymer bitumens, depending on the roof structure.

9. Support course according to any one of claims 1 to 8, whose self-adhesive layer (7) is covered by means of a siliconised and removable separation layer or the like.

10. Support course according to claims 1 to 9, on the upper outer layer (5) of which is arranged a polymer film (6) or a polymer fleece or the like.

11. Support course according to claims 1 to 10, whose edge regions (9, 10) are similarly provided with a thin layer which is in the form of a self-adhesive layer and which is also provided with a siliconised and removable separation layer for better handling.

## Revendications

1. Bande structurée à plots pour toitures ou similaires, comportant une couche-support (2) intermédiaire et une couche de couverture inférieure (1) qui est disposée au-dessous de la couche-support (2) intermédiaire et sur la face inférieure de laquelle sont formés des plots (3) par lesquels un système de cavités communicantes garantissant un équilibrage de la tension de vapeur de tous côtés peut être formé entre la bande structurée à plots et le toit à étancher, **caractérisé en ce qu'**une couche auto-adhésive (7) est appliquée sur la face inférieure de la couche de couverture inférieure (1) et des plots (3) et une couche de couverture supérieure (5) est appliquée sur la face supérieure de la couche-support (2) intermédiaire.

2. Bande structurée à plots selon la revendication 1, dans laquelle la couche auto-adhésive (7) est conformée en film fin.

3. Bande structurée à plots selon la revendication 1 ou 2, dans laquelle la couche de couverture inférieure (1), dans une zone de bord transversal (9) et dans une zone de bord longitudinal (10), au niveau de sa face inférieure, présente des portions sans plots ainsi qu'une couche auto-adhésive.

4. Bande structurée à plots selon une des revendications 1 à 3, dans laquelle la couche auto-adhésive (7) est conformée de manière telle qu'elle puisse être appliquée au moyen d'un rouleau sur la face inférieure de la couche de couverture inférieure (1) et des plots (3).

5. Bande structurée à plots selon une des revendications 1 à 4, dans laquelle la couche support (2) intermédiaire est réalisée sous la forme d'un produit non-tissé de verre ou d'un tissu de verre ou d'autres matériaux de support connus, courants, pour des bandes de couverture.

6. Bande structurée à plots selon une des revendications 1 à 5, dans laquelle la couche support (2) intermédiaire est imprégnée d'une masse de bitume ou de bitume polymère, de préférence de bitume plastomère.

7. Bande structurée à plots selon une des revendications 1 à 6, dans laquelle la couche de couverture inférieure (1) est réalisée de préférence en bitume plastomère stabilisé au moyen de charges ou en d'autres bitumes polymères présentant une résistance élevée aux sollicitations thermiques et à la compression.

8. Bande structurée à plots selon une des revendications 1 à 7, dans laquelle la couche de couverture supérieure (5) est réalisée de préférence en bitume plastomère stabilisé au moyen de charges ou au choix selon la structure de la toiture en d'autres bitumes polymères.

9. Bande structurée à plots selon une des revendications 1 à 8, dans laquelle la couche auto-adhésive (7) est protégée au moyen d'une couche siliconée pelable ou similaire.

10. Bande structurée à plots selon les revendications 1 à 9, dans laquelle une feuille de polymère (6) ou un non tissé de polymère ou similaire est disposée sur la couche de couverture supérieure (5).

11. Bande structurée à plots selon les revendications 1 à 10, dans laquelle les zones de bord (9, 10) sont également pourvues d'une fine couche auto-adhésive qui, pour une plus grande facilité de manipulation, est également recouverte d'une couche siliconée pelable.
